(19) Europäisches Patentamt
European Patent Office
Office européen des brevets

(11) **EP 4 432 454 A1**

(12) **EUROPEAN PATENT APPLICATION**
published in accordance with Art. 153(4) EPC

(43) Date of publication:
**18.09.2024 Bulletin 2024/38**

(51) International Patent Classification (IPC):
**H01M 50/533** (2021.01)

(21) Application number: **23864159.1**

(22) Date of filing: **09.01.2023**

(86) International application number:
**PCT/CN2023/071396**

(87) International publication number:
**WO 2024/148470 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde City, Fujian 352100 (CN)**

(72) Inventors:
• **XUE, Qingrui**
  **Ningde City, Fujian 352100 (CN)**
• **ZHANG, Zige**
  **Ningde City, Fujian 352100 (CN)**

• **LI, Wei**
  **Ningde City, Fujian 352100 (CN)**
• **ZHANG, Yu**
  **Ningde City**
  **Fujian 352100 (CN)**
• **ZHAO, Zhengyuan**
  **Ningde City, Fujian 352100 (CN)**
• **ZHANG, Jinsong**
  **Ningde City, Fujian 352100 (CN)**

(74) Representative: **Rowlands, Stuart Michael et al**
**Maucher Jenkins**
**Seventh Floor Offices**
**Artillery House**
**11-19 Artillery Row**
**London SW1P 1RT (GB)**

(54) **ELECTRODE SHEET, ELECTRODE ASSEMBLY, BATTERY CELL, BATTERY, AND ELECTRICAL DEVICE**

(57) Embodiments of this application provide an electrode plate, including a current collector, an active substance layer, and a conductive structure. The current collector includes a body portion and a tab portion provided along a first direction, where the body portion is covered with the active substance layer, the tab portion is not covered with the active substance layer, and the conductive structure extends along the first direction and is connected to the tab portion, forming a connecting zone. In a second direction, the connecting zone has a dimension greater than the thickness of a body region of the electrode plate, so that after an electrode assembly is wound, connecting zones of adjacent layers are mutually attached; where the second direction is a thickness direction of the electrode plate, the second direction is perpendicular to the first direction, and the body region of the electrode plate is a region corresponding to the body portion covered with the active substance layer. The electrode plate provided in the embodiments of this application can improve the safety performance of the battery. This application also provides an electrode assembly, battery cell, battery, and electric device including the foregoing electrode plate.

FIG. 4

# Description

## TECHNICAL FIELD

This application relates to the technical field of batteries, and in particular, to an electrode plate, an electrode assembly, a battery cell, a battery, and an electric apparatus.

## BACKGROUND

With the increasing severity of environmental pollution, the new energy industry has gained growing attention. In the field of new energy, battery technology plays a crucial role in its development.

During the development process of battery technology, how the safety performance of batteries is improved is a pressing issue that needs to be addressed.

## SUMMARY

In view of the above problem, this application provides an electrode plate, an electrode assembly, a battery cell, a battery, and an electric device, which can improve the safety performance of the battery.

According to a first aspect, an electrode plate is provided, including a current collector, an active substance layer, and a conductive structure. The current collector includes a body portion and a tab portion provided along a first direction, where the body portion is covered with the active substance layer, the tab portion is not covered with the active substance layer, and the conductive structure extends along the first direction and is connected to the tab portion, forming a connecting zone. In a second direction, the connecting zone has a dimension greater than the thickness of a body region of the electrode plate, so that after an electrode assembly is wound, connecting zones of adjacent layers are mutually attached; where the second direction is a thickness direction of the electrode plate, the second direction is perpendicular to the first direction, and the body region of the electrode plate is a region corresponding to the body portion covered with the active substance layer.

In the foregoing embodiments, the dimension of the connecting zone in the second direction is greater than the thickness of the body region of the electrode plate, so that connecting zones of adjacent layers of the electrode assembly, formed by winding the electrode plate, are mutually attached, ensuring that there is no gap between the adjacent layers. When the conductive structure is laser-welded with the top cover, the mutually attached connecting zones can prevent the laser from penetrating through the gaps between the conductive structures and damaging the separator. Furthermore, the mutually attached connecting zones prevent foreign particles such as metal burrs generated during battery processing from entering the gaps and damaging the separator or causing an internal short circuit. In this way, the safety performance of the battery is improved.

In some possible embodiments of the first aspect, the conductive structure includes a first conductive portion and a second conductive portion, the first conductive portion and the second conductive portion being connected to two sides of the tab portion in the second direction, respectively. Through the foregoing embodiments, the current flow capacity of the tab portion can be improved.

In some possible embodiments of the first aspect, the current collector includes an insulating layer and a first conductive layer and a second conductive layer provided on two sides of the insulating layer, and the first conductive portion and the second conductive portion are connected to the first conductive layer and the second conductive layer, respectively.

Through the foregoing embodiments, when a thermal runaway occurs in the battery cell, the insulating layer in the current collector experiences a cut-off effect due to heating, which can enhance the safety of the battery cell; additionally, the first conductive portion and the second conductive portion can collect the currents from the first conductive layer and the second conductive layer, thereby improving the current flow capacity.

In some possible embodiments of the first aspect, the connecting zone is a welding mark zone formed by welding between the conductive structure and the tab portion.

Through the foregoing embodiments, the conductive structure can be tightly connected to the tab portion, and the size of the connecting zone is easy to control, resulting in low processing difficulty.

In some possible embodiments of the first aspect, in the second direction, the dimension D of the connecting zone satisfies: $D \geq d1 + d2 + 2d3$, where d1 is thickness of the body region of the electrode plate, d2 is thickness of the body region of an electrode plate with an opposite polarity that forms an electrode assembly with the electrode plate, and d3 is thickness of a separator that forms the electrode assembly with the electrode plate.

Through the foregoing embodiments, the thickness of the connecting zone can be controlled within an appropriate range so as to fill the gaps between electrode assemblies. When the dimension D of the connecting zone is smaller than that limited by the foregoing formula, on one hand, the thickness of the connecting zone is too small to serve the function of preventing the burning of the separator during the welding of the wound electrode assembly with the top cover; on the other hand, there will be gaps between the connecting zones of adj acent layers after the electrode assembly is wound, which may allow foreign particles to enter the electrode assembly during battery processing, affecting the safety performance of the battery. Therefore, the dimension D of the connecting zone should not be too small.

In some possible embodiments of the first aspect, in the second direction, the dimension H of the connecting zone is 2 mm-9 mm.

Through the foregoing embodiments, a balance can be achieved between the volume of the connecting zone and safety performance.

In some possible embodiments of the first aspect, in the first direction, the dimension H1 of the connecting zone is 3 mm-11 mm.

Through the foregoing embodiments, the dimension of the connecting zone in the first direction is appropriate, without affecting the winding of the electrode assembly or occupying too much space, thereby balancing the safety performance and energy density.

In some possible embodiments of the first aspect, in the first direction, the dimension H2 of the conductive structure is 3 mm-12 mm.

Through the foregoing embodiments, both proper conductive function and ease of welding can be ensured without occupying too much space, ensuring energy density.

In some possible embodiments of the first aspect, the material of the conductive structure is at least one of copper and aluminum.

In the foregoing embodiments, the material of the conductive structure is readily accessible and cost-effective, facilitating the processing and preparation of the conductive structure.

According to a second aspect, an electrode assembly is provided, including a positive electrode plate, a separator, and a negative electrode plate, where the separator is provided between the positive electrode plate and the negative electrode plate, the positive electrode plate, the separator, and the negative electrode plate are wound together, and the positive electrode plate and/or the negative electrode plate is the electrode plate according to the first aspect or any possible embodiment of the first aspect.

In some possible embodiments of the second aspect, the tab portion of the positive electrode plate and the tab portion of the negative electrode plate are provided opposite each other along the first direction.

In some possible embodiments of the second aspect, the conductive structure at the outermost layer of the positive electrode plate is covered with a separator.

Through the foregoing embodiments, a short circuit between the electrode assembly and the housing body can be prevented, thus improving the safety performance of the battery.

According to a third aspect, a battery cell is provided, including the electrode assembly according to the second aspect or any possible embodiment of the second aspect; a housing body, where the housing body has openings at two ends, and the housing body is configured to accommodate the electrode assembly; and a top cover, where the top cover is connected to an end of the conductive structure away from the body portion and covers the opening.

According to a fourth aspect, a battery is disclosed, including the battery cell according to the third aspect or any possible embodiment of the third aspect.

According to a fifth aspect, an electric device is disclosed, including the battery according to the fourth aspect or any possible embodiment of the fourth aspect, where the battery is configured to provide electric energy for the electric device.

**BRIEF DESCRIPTION OF DRAWINGS**

To describe the technical solutions of the embodiments of this application more clearly, the following briefly describes the accompanying drawings required for describing the embodiments of this application. It will be apparent that the accompanying drawings described below show merely some embodiments of this application, and persons of ordinary skill in the art may still derive other drawings from the accompanying drawings without creative efforts.

FIG. 1 is a structural schematic diagram of a vehicle according to an embodiment of this application;
FIG. 2 is a structural schematic exploded view of a battery according to an embodiment of this application;
FIG. 3 is a structural schematic exploded view of a battery cell according to an embodiment of this application;
FIG. 4 is a structural schematic diagram of an electrode plate according to an embodiment of this application;
FIG. 5 is a structural schematic diagram of an electrode plate according to another embodiment of this application;
FIG. 6 is a partial cross-sectional view of an electrode assembly according to an embodiment of this application;
FIG. 7 is a top view of an electrode assembly according to an embodiment of this application; and

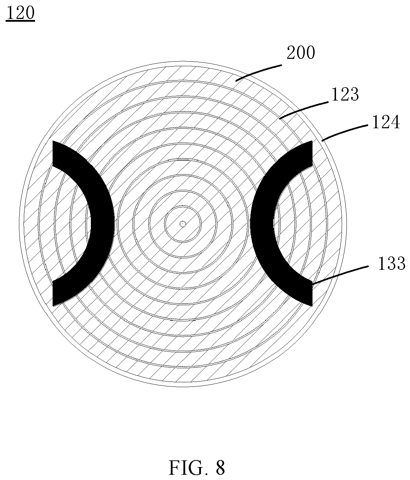

FIG. 8 is a structural schematic diagram of an electrode assembly welded with a top cover according to an embodiment of this application.

The accompanying drawings are not drawn to scale.

Reference signs are as follows: 1. vehicle; 10. battery; 20. controller; 30. motor; 100. battery cell; 300. box; 301. upper box body; 302. lower box body; 110. housing body; 120. electrode assembly; 121. first electrode plate; 122. second electrode plate; 123. separator; 130. end cover assembly; 131. end cover; 132. electrode terminal; 200. electrode plate; 201. current collector; 201a. body portion; 201b. tab portion; 202. active substance layer; 203. conductive structure; 204. connecting zone; 2011: insulating layer; 2012: first conductive layer; and 2013: second conductive layer.

## DESCRIPTION OF EMBODIMENTS

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

In the description of this application, it should be noted that, unless otherwise stated, "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description are all directions shown in the figures, and do not limit the specific structure of the application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as limitations on the embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, or an interaction between two elements. Persons of ordinary skill in the art can understand specific meanings of these terms in this application as appropriate to specific situations.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

The battery in this application is a single physical module that includes one or more battery cells for providing electric power. For example, the battery mentioned in this application may include a battery module, a battery pack, or the like. A battery typically includes a box configured to enclose one or more battery cells. The box can prevent liquids or other foreign matter from affecting charging or discharging of the battery cell.

Optionally, the battery cell may include a lithium-ion secondary battery, a lithium-ion primary battery, a lithium-sulfur battery, a sodium/lithium-ion battery, a sodium ion battery, a magnesium ion battery, or the like.

This is not limited in the embodiments of this application.

To meet different power requirements, a plurality of battery cells in the battery may be connected in series, parallel, or series-parallel, where being connected in series-parallel means a combination of series and parallel connections. Optionally, the plurality of battery cells may be connected in series, parallel, or series-parallel to form a battery module first, and then a plurality of battery modules are connected in series, parallel, or series-parallel to form a battery. In a word, the plurality of battery cells may be directly combined into a battery, or may first be combined into battery modules that are then combined into a battery. The battery is then disposed in an electric device to provide electric energy for the electric device.

The battery cell includes an electrode assembly and an electrolyte. The electrode assembly includes a positive electrode plate, a negative electrode plate, and a separator. Working of the battery cell mainly relies on the migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of the positive electrode current collector not coated with the positive electrode active substance layer protrudes out of the part of the positive electrode current collector coated with the positive electrode active substance layer and serves as a positive tab. The positive electrode current collector and the negative electrode current collector may be collectively referred to as current collectors. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. A current collector not coated with the negative electrode active substance layer protrudes from the current collector coated with the negative electrode active substance layer and serves as a negative tab. The negative electrode current collector may be made of copper, and the negative electrode active substance may be graphite, carbon, silicon, or the like. To allow a large current to pass through without any fusing, multiple positive tabs are provided and stacked together, and multiple negative tabs are provided and stacked together. The separator may be made of polypropylene (PP), polyethylene (PE), or the like.

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of traction batteries, market demands for traction batteries are also expanding. For example, in new energy vehicles, a plurality of cylindrical battery cells are commonly used to form a battery module. Batteries can be categorized into single-tab, double-tab, multi-tab, and full-tab types according to the differences in the number and area of the tabs. Among them, the full-tab structure is a common structure for cylindrical batteries. The full-tab structure means that the entire positive and negative electrode current collectors serve as tabs, implementing a full-area connection to the housing body or top cover of the battery through the current collectors. During the processing of cylindrical batteries with full-tab structure, the full tabs of the positive and negative electrodes of the wound electrode assembly need to be shaped into a flat surface that protrudes a certain distance above the separator. This facilitates subsequent welding with the top cover, that is, welding with the current collector plate in the top cover. However, the flattening process may give rise to various issues. For example, if the flattening speed is too fast, the electrode plates may flip outward, causing a short circuit with the housing body; and if the flattening speed is too slow, the production efficiency is low. Additionally, the metal debris generated during the flattening may enter the electrode assembly or the tabs may insert into the interior of the electrode assembly during the flattening process, causing an internal short circuit in the electrode assembly. For certain types of electrode assemblies, such as large cylindrical electrode assemblies with composite current collectors, the flattening process is not suitable. When such electrode assemblies are laser-welded with the top cover, the laser may penetrate the separator through the gaps between the tabs, compromising the safety performance of the battery.

In view of this, embodiments of this application provide an electrode plate, including a current collector, an active substance layer, and a conductive structure. The current collector includes a body portion and a tab portion provided along a first direction, where the body portion is covered with the active substance layer, the tab portion is not covered with the active substance layer, and the conductive structure extends along the first direction and is connected to the tab portion, forming a connecting zone. In a second direction, the connecting zone has a dimension greater than the thickness of a body region of the electrode plate, so that after an electrode assembly is wound, connecting zones of adjacent layers are mutually attached; where the second direction is a thickness direction of the electrode plate, the second direction is perpendicular to the first direction, and the body region of the electrode plate is a region corresponding to the body portion covered with the active substance layer. For the electrode plate in the embodiments of this application, the dimension of the connecting zone in the second direction is greater than the thickness of the body region of the electrode plate, so that connecting zones of adjacent layers of the electrode assembly, formed by winding the electrode plate, are mutually attached, ensuring that there is no gap between adjacent layers. When the conductive structure is laser-welded with the top cover, the mutually attached connecting zones can prevent the laser from penetrating through the gaps between the conductive structures and damaging the separator. Furthermore, the mutually attached connecting zones prevent foreign particles such as metal burrs generated during battery processing from entering the gaps and damaging the separator or causing an internal short circuit. In this way, the safety performance of the battery is improved.

The technical solutions described in the embodiments of this application are all applicable to a variety of electric devices using a battery. The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric device being a vehicle is used as an example for description of the following embodiments.

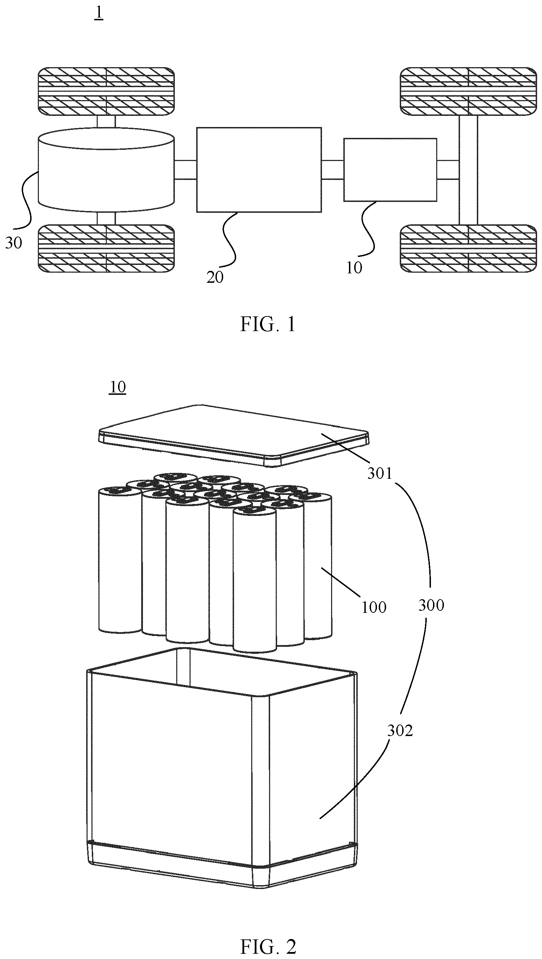

FIG. 1 is a schematic diagram of the structure of a vehicle 1 provided in an embodiment of this application, as shown in FIG. 1, the vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 30, a controller 20, and a battery 10 may be provided inside the vehicle 1, where the controller 20 is configured to control the battery 10 to supply power to the motor 30. For example, the battery 10 may be provided at the bottom, front, or rear of the vehicle 1. The battery 10 may be configured to supply power to the vehicle 1. For example, the battery 10 may be used as an operational power source for the vehicle 1 that is configured for a circuit system of the vehicle 1, for example, to satisfy power needs for start, navigation, and running of the vehicle 1. In another embodiment of this application, the battery 10 can be used as not only the operational power source for the vehicle 1, but also a driving power source for the vehicle 1, replacing or partially replacing fossil fuel or natural gas to provide driving traction for the vehicle 1.

To meet different requirements for power use, the battery 10 may include a plurality of battery cells. FIG. 2 is a structural schematic exploded view of a battery 10 according to an embodiment of this application, as shown in FIG. 2, the battery 10 may include a plurality of battery cells 100. Based on different power demands, battery cells 100 can be set in any quantity. The plurality of battery cells 100 may be connected in series, in parallel, or in series and parallel to achieve greater capacity or power, where being connected in series-parallel means a combination of series and parallel connections of the plurality of battery cells 100. The plurality of battery cells 100 may be directly connected in series, parallel, or series-parallel, and then an entirety of the plurality of battery cells 100 is accommodated in the box 300. The battery 10 may further include other structures, for example, a busbar (not shown in the figure) configured to implement an electrical connection between the plurality of battery cells 100.

In addition to the battery cell 100, the battery 10 may further include a box 300 (or referred to as a cover), where the box 300 has a hollow structure inside, and the plurality of battery cells 100 are accommodated in the box 300. As shown in FIG. 2, the box 300 may include two parts, herein referred to as the upper box body 301 and the lower box body 302, respectively. The upper box body 301 and the lower box body 302 are snap-fitted together. Shapes of the upper box body 301 and the lower box body 302 may be determined based on a shape of the combined plurality of battery cells 100, with at least one of the upper box body 301 and the lower box body 302 parts having an opening. For example, only one of the upper box body 301 and lower box body 302 included in the box 300 may be a hollow housing body with an opening, while the other is plate-shaped for covering the opening of the housing body. For example, as shown in FIG. 2, the lower box body 302 is a hollow housing body and has only one face with an opening and the upper box body 301 is plate-shaped. The upper box body 301 covers the opening of the lower box body 302 to form the box 300 with a closed chamber. The chamber may be configured to accommodate the multiple battery cells 100. Optionally, the upper box body 301 and lower box body 302 included in the box 300 in the embodiments of this application may be of other shapes. For example, the upper box body 301 and the lower box body 302 each may be a hollow housing body and have only one face with an opening, where the opening of the upper box body 301 is disposed opposite the opening of the lower box body 302, and the upper box body 301 and the lower box body 302 are snap-fitted to form the box 300 with a closed chamber. The multiple battery cells 100 are connected in parallel, in series, or in series-parallel, and then placed into the box formed after the upper box body 301 and the lower box body 302 are snap-fitted. The box 300 may be provided in different shapes such as cuboid, cylinder, and the like according to the number and structural types of the battery cells 100 accommodated in it. This is not limited in this application.

Each battery cell 100 may be a secondary battery or a primary battery, and may be a lithium-sulfur battery, a sodium-ion battery, or a magnesium-ion battery, without being limited thereto.

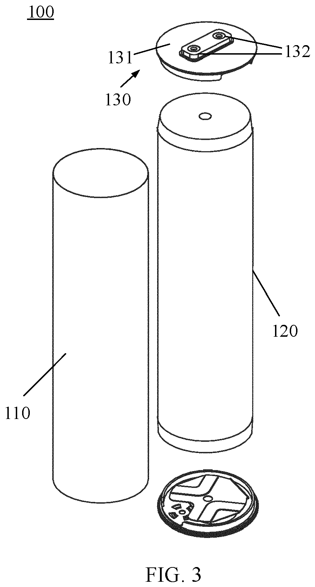

FIG. 3 is a structural schematic exploded view of a battery cell 100 according to some embodiments of this application. As shown in FIG. 3, the battery cell 100 may include a housing body 110, an electrode assembly 120, and a top cover 130. The housing body 110 and the top cover 130 form a housing or battery box, and the walls of the housing body 110 and the walls of the top cover 130 are collectively referred to as the walls of the battery cell 100. A shape of the housing body 110 is determined depending on a shape formed after combining one or more electrode assemblies 120. For example, the housing body 110 may be a hollow cylinder as shown in FIG. 3; or, if the battery cell 100 is a blade-type battery cell, the housing body 110 may be a cuboid with a long length. In addition, at least one surface of the housing body 110 has an opening to allow one or more electrode assemblies 120 to be placed into the housing body 110. For example, when the housing body 110 is a hollow cylinder, the end face of the housing body 110 is an opening face, which means that the end face has no wall so that the inside and the outside of the housing body 110 are in communication. As can be seen in FIG. 3, the cylindrical battery cell 100 has two circular end surfaces and a column connecting the two circular end surfaces, and the column portion may include an electrode assembly 120. The top cover 130 covers the opening and is connected to the housing body 110 to form an enclosed cavity for accommodating the electrode assembly 120. The housing body 110 is filled with an electrolyte such as a liquid electrolyte.

The top cover 130 includes an end cover 131 and an electrode terminal 132, and the electrode terminal 132 may be provided on the end cover 131. The top cover 130 also includes a connecting member, or referred to as a current collecting member, for electrically connecting the electrode assembly 120 and the electrode terminal 132.

Each electrode assembly 120 may have two tabs, for example, a first tab and a second tab, the first tab and the second tab having opposite polarities. For example, when the first tab is a positive tab, the second tab is a negative tab. The first tabs of the one or more electrode assemblies 120 are connected to one electrode terminal through one connecting member, and the second tabs of the one or more electrode assemblies 120 are connected to the other electrode terminal through the other connecting member. Optionally, the two electrode terminals may be provided on the same end face of the battery cell 100; or they may be provided on two end faces of the battery cell 100, respectively.

In the battery cell 100, one or more electrode assemblies 120 may be provided depending on an actual need. For example, the battery cell 100 shown in FIG. 3 is provided with one electrode assembly 120.

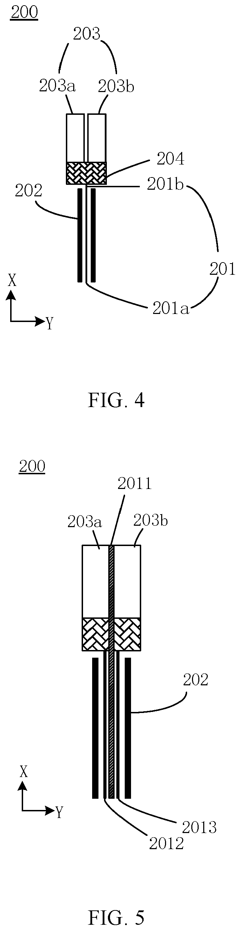

As an illustrative example, the following describes the structure of the electrode plate provided in the embodiments of this application with reference to FIG. 4 and FIG. 5. FIG. 4 is a structural schematic diagram of an electrode plate 200 according to an embodiment of this application. As shown in FIG. 4, the electrode plate 200 includes a current collector 201, an active substance layer 202, and a conductive structure 203; where the current collector 201 includes a body portion 201a and a tab portion 201b provided along a first direction X, the body portion 201a is covered with the active substance layer 202, and the tab portion 201b is not covered with the active substance layer 202; the conductive structure 203 extends along the first direction X and is connected to the tab portion 201b, forming a connecting zone 204; and in the second direction, the connecting zone 204 has a dimension greater than the thickness of the body portion 201a of the electrode plate 200, so that after an electrode assembly 120 is wound, connecting zones 204 of adjacent layers are mutually attached, where the second direction Y is a thickness direction of the electrode plate 200, the second direction Y is perpendicular to the first direction X, and the body region of the electrode plate 200 is a region corresponding to the body portion 201a covered with the active substance layer 202.

The dimension of the connecting zone 204 of the electrode plate 200 in the second direction Y is greater than the thickness of the body portion 201a of the electrode plate, so that connecting zones 204 of adjacent layers of the electrode assembly 120, formed by winding the electrode plate 200, are mutually attached, ensuring that there is no gap between the adjacent layers. When the conductive structure 203 is laser-welded with the top cover, the mutually attached connecting zones 204 can prevent the laser from penetrating through the gaps between the conductive structures and damaging the separator 123. Furthermore, the mutually attached connecting zones prevent foreign particles such as metal burrs generated during battery processing from entering the gaps and damaging the separator 123 or causing an internal short circuit. In this way, the safety performance of the battery is improved.

The body portion 201a of the current collector 201 is covered with the active substance layer 202, and the current collector 201 is configured to collect the currents generated by the active substance in the active substance layer 202 to form a large current for external output. The current collector 201 should be in sufficient contact with the active substance, with an internal resistance as small as possible. The electrode plate 200 shown in FIG. 4 may be a negative electrode plate or a positive electrode plate. This is not limited in this application.

When the electrode plate 200 is a positive electrode plate, the active substance layer 202 may include a lithium-nickel oxide, a lithium-cobalt oxide, a lithium-titanium oxide, a nickel-cobalt polyoxide, a lithium-manganese oxide, a lithium-iron-phosphorus oxide, and the like. When the electrode plate 200 is a negative electrode plate, the active substance layer 202 may include a carbon material, for example, graphite, soft carbon (such as coke), hard carbon, and the like, or may include a non-carbon material, for example, nitride, PAS, tin-based oxide, tin alloy, nano-negative electrode material, and some other intermetallic compounds.

The conductive structure 203 is configured to connect to the tab portion 201b of the current collector 201 to ensure the current flow capacity of the battery. The conductive structure 203 can be configured to be welded with the top cover to draw electrical energy out of the battery cell. The dimension of the connecting zone 204 formed by the connection between the conductive structure 203 and the tab portion 201b in the second direction is greater than the thickness of the body region of the electrode plate 200 so that the connecting zones 204 of the adjacent layers of the electrode assembly 120 formed by winding the electrode plate 200 are mutually attached, allowing the mutually attached connecting zones 204 to cover the separator 123 between the electrode plates 200.

Therefore, in the embodiments of this application, the dimension of the connecting zone 204 in the second direction Y is greater than the thickness of the body region of the electrode plate 200, so that connecting zones 204 of adjacent layers of the electrode assembly 120, formed by winding the electrode plate 200, are mutually attached, ensuring that there is no gap between the adjacent layers. When the conductive structure 203 is laser-welded with the top cover, the mutually attached connecting zones 204 can prevent the laser from penetrating through the gaps between the conductive structures 203 and burning the separator. Furthermore, the mutually attached connecting zones prevent foreign particles such as metal burrs generated during battery processing from entering the gaps and causing an internal short circuit and the like. In this way, the safety performance of the battery is improved. In addition, the flattening process can be eliminated, thereby avoiding problems such as burrs generated during the flattening process entering the interior of the electrode assembly and the insertion of the tabs into the interior of the electrode assembly.

Optionally, in the embodiments of this application, the conductive structure 203 includes a first conductive portion 203a and a second conductive portion 203b, the first conductive portion 203a and the second conductive portion 203b being connected to two sides of the tab portion 201b in the second direction Y Through the connection of the first conductive portion 203a and the second conductive portion 203b on two sides of the tab portion 201b, the current flow capacity of the tab portion 201b can be improved.

FIG. 5 is a structural schematic diagram of an electrode plate according to another embodiment of this application. Optionally, as shown in FIG. 5, in some embodiments of this application, the current collector 201 includes an insulating layer 2011 and a first conductive layer 2012 and a second conductive layer 2013 provided on two sides of the insulating layer 2011, and the first conductive portion 203a and the second conductive portion 203b are connected to the first conductive layer 2012 and the second conductive layer 2013, respectively. The first conductive layer 2012, the insulating layer 2011, and the second conductive layer 2013 may be stacked in sequence along the second direction Y The insulating layer 2011 may be a polymer material such as polypropylene (PP) or thermoplastic polyester (polyethylene terephthalate, PET), and the first conductive layer 2012 and the conductive layer may be a metal material, for example, copper or aluminum. The first conductive layer 2012 and the second conductive layer 2013 may be connected to the insulating layer 2011 by means of vacuum coating. In addition, portions of the surfaces of the first conductive layer 2012 and the second conductive layer 2013 away from the insulating layer 2011 are coated with the active substance layer 202. The first conductive portion 203a is connected to the portion of the surface of the first conductive layer 2012 that is away from the insulating layer 2011 and not coated with the active substance layer 202; and the second conductive portion 203b is connected to the portion of the surface of the second conductive layer 2013 that is away from the insulating layer 2011 and not coated with the active substance layer 202. It should be noted that the first conductive portion 203a and the second conductive portion 203b may be connected by integral forming, or may be connected by welding, bonding, or the like.

It should be noted that when the first conductive portion 203a and the second conductive portion 203b are connected by integral forming, the first conductive portion 203a and the second conductive portion 203b may be made of metal foils, and the first conductive portion 203a and the second conductive portion 203b are welded with the first conductive layer 2012 and the second conductive layer 2013, respectively. In the foregoing embodiments, when a battery cell 100 is working normally, the first conductive portion and the second conductive portion can collect the currents from the first conductive layer and the second conductive layer, thereby improving the current flow capacity. In addition, since the current collector 201 is provided with an insulating layer 2011, under the premise that the thickness of the current collector 201 remains unchanged, the thicknesses of the first conductive layer 2012 and the second conductive layer 2013 can be reduced, so that when a foreign object pierces through the electrode plate 200, due to the small thicknesses of the first conductive layer 2012 and the second conductive layer 2013, the burrs generated by the first conductive layer 2012 and the second conductive layer 2013 at the sites pierced through by the foreign object are small, increasing the difficulty of piercing through the separator 123, thereby avoiding a short circuit and improving the safety performance of the battery. Furthermore, when thermal runaway occurs in the battery cell, the insulating layer 2011 in the current collector 201 experiences a cut-off effect due to heating. This can also avoid a short circuit and improve the safety performance of the battery cell.

Optionally, the connecting zone 204 in the embodiments of this application may be a welding mark zone formed by welding the conductive structure 203 with the tab portion 201b. Forming the connecting zone 204 by welding enables the conductive structure 203 and the tab portion 201b to be tightly connected. The size of the connecting zone 204 is easy to control, resulting in low processing difficulty. Optionally, the welding mark zone may be formed by roll welding. This enables the welding mark zone to be formed at one step, further reducing the complexity of processing.

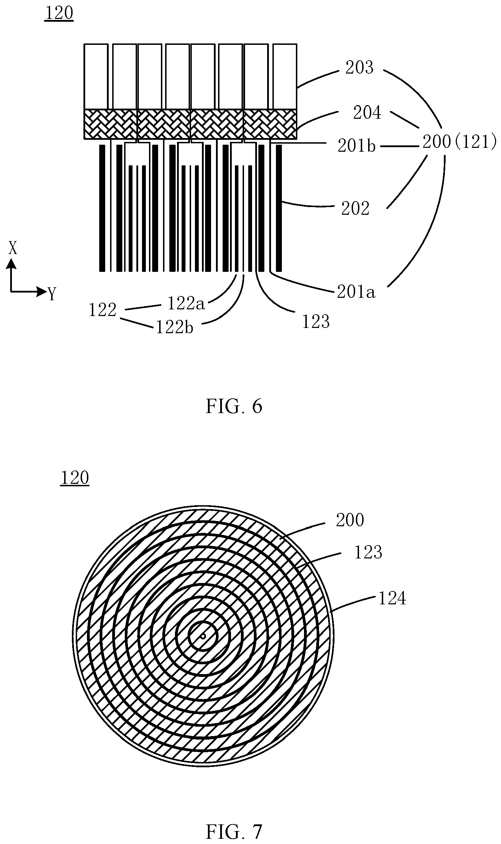

FIG. 6 is a partial cross-sectional structural view of an electrode assembly 120 formed by winding an electrode plate 200 according to an embodiment of this application. FIG. 7 is a top view of an electrode assembly 120 formed by winding an electrode plate 200 according to an embodiment of this application. As shown in FIG. 6, the electrode assembly 120 includes a first electrode plate 121, a second electrode plate 122, and a separator 123, where the first electrode plate 121 and the second electrode plate 122 have opposite polarities, that is, the first electrode plate 121 is a positive electrode plate and the second electrode plate 122 is a negative electrode plate, or the first electrode plate 121 is a negative electrode plate and the second electrode plate 122 is a positive electrode plate. This is not limited in this application. The separator 123 is provided between the first electrode plate 121 and the second electrode plate 122, preventing a short circuit between the positive and negative electrode plates. The first electrode plate 121, the separator 123, and the second electrode plate 122 are stacked in sequence and wound to form a wound electrode assembly 120. The first electrode plate 121 and the second electrode plate 122 are the electrode plate 200 provided in the embodiments of this application. The tab region of the first electrode plate 121 and the tab region of the second electrode plate 122 are provided opposite each other along the first direction X.

As shown in FIG. 6, a layer of the electrode assembly 120 includes a body portion of the first electrode plate 121, a body portion of the second electrode plate 122, and a separator 123. Therefore, to enable the connecting zone 204 to block laser from burning the separator 123, in the second direction Y, the minimum thickness of each layer is at least a sum of the thickness of the body region of the first electrode plate 121, the thickness of the body region of the second electrode plate 122, and the thickness of two separators 123. If the dimension of the connecting zone 204 in the second direction Y is too small, the connecting zones 204 of adjacent layers after winding cannot be attached together. As a result, the connection zone cannot provide the function of preventing burns to the separator 123 during welding of the wound electrode assembly 120 with the top cover.

Therefore, optionally, in the embodiments of this application, in the second direction Y, the dimension of the connecting zone 204 satisfies: $D \geq d1 + d2 + 2d3$, where d1 is thickness of the body region of the electrode plate 200, d2 is thickness of the body region of an electrode plate with an opposite polarity that forms an electrode assembly 120 with the electrode plate, and d3 is thickness of a separator 123 that forms the electrode assembly 120 with the electrode plate. Thickness of the body region of the electrode plate 200 is the sum of the thickness of the current collector 201 and the thicknesses of the active substance layers 202 on two sides of the current collector 201. When the dimension D of the connecting zone is smaller than that limited by the foregoing formula, the thickness of the connecting zone 204 is too small. On one hand, it is difficult for the connecting zone to serve the function of preventing the burning of the separator 123 during the welding of the wound electrode assembly 120 with the top cover. On the other hand, there will be gaps between the connecting zones of adjacent layers after the electrode assembly 120 is wound, which may allow foreign particles to enter the electrode assembly 120 during battery processing, affecting the safety performance of the battery. Therefore, the dimension D of the connecting zone 204 should not be too small.

Optionally, in the second direction Y, the dimension H of the connecting zone 204 is 2 mm-9 mm. If the dimension of the connecting zone 204 in the second direction Y is too small, for example, less than 2 mm, it is difficult for the connection regions 204 to be mutually attached after winding, failing to prevent burns to the separator during the welding of the wound electrode assembly with the top cover. Additionally, the processing difficulty of the connection region 204 and the electrode plate 200 will be increased. If the dimension of the connecting zone 204 in the second direction Y is too large, for example, greater than 9 mm, it will result in gaps between the layers after winding. In addition, the volume of the connecting zone 204 will be too large, resulting in a low energy density of the battery, or leading to the problem of edge spalling in the winding process of the electrode plate 200, which affects the production efficiency of the battery.

Optionally, in the first direction X, the dimension H1 of the connecting zone 204 is 3 mm-11 mm. If the dimension of the connecting zone 204 in the first direction X is too small, on one hand, it will increase the possibility that the connecting zone 204 is burned through during welding of the conductive structure 203 with the top cover, affecting the electrical conductivity and long-term stability of the current collector 201; and on the other hand, it will increase the difficulty of processing the connecting zone 204, affecting the process stability of the battery. If the dimension of the connecting zone 204 in the first direction X is too large, for example, greater than 11 mm, the winding of the electrode assembly 120 is affected and too much space is occupied, affecting the energy density of the battery. Therefore, limiting the dimension H1 of the connecting zone 204 in the first direction X to the above range can balance the safety performance and energy density of the battery.

Optionally, in the first direction X, the dimension H2 of the conductive structure 203 is 3 mm-12 mm. If the dimension of the conductive structure 203 in the first direction X is too small, the conductivity and long-term stability of the current collector 201 will be affected, and it will be difficult to weld. If the dimension of the conductive structure 203 in the first direction X is too large, the energy density of the battery will be reduced. Therefore, limiting the dimension H2 of the conductive structure 203 in the first direction X to the above range ensures the normal conductive function and easy welding without occupying too much space, thereby maintaining the energy density of the battery.

In the embodiments of the present invention, the material of the conductive structure 203 may include at least one of copper and aluminum. Optionally, the conductive structure 203 may be made of a metal foil, for example, a Cu/Al foil. When the conductive structure 203 is a Cu/Al foil, the Cu/Al foil is welded with the metal layer of the current collector 201, so that the current generated by the metal layer of the current collector 201 can be gradually directed to the tabs, electrode poles, and other structures of the battery through the Cu/Al foil.

Embodiments of this application further provide an electrode assembly, where the electrode assembly may be the electrode assembly 120 shown in FIG. 6. The electrode assembly 120 includes a positive electrode plate, a separator, and a negative electrode plate. The separator is provided between the positive electrode plate and the negative electrode plate, and the positive electrode plate, the separator, and the negative electrode plate are wound. The positive electrode plate and/or the negative electrode plate are the electrode plates 200 provided in the embodiments of this application. The tab portion of the positive electrode plate and the tab portion of the negative electrode plate are provided opposite each other along the first direction X. The electrode assembly may be the electrode assembly 120 shown in FIG. 6. Here, the description of the positive electrode plate and the negative electrode plate is the same as that of the foregoing electrode plate 200, and the details are not described again herein. The separator may be made of polypropylene or polyethylene (PE).

Optionally, the conductive structure 203 at the outermost layer of the positive electrode plate 21 is covered with an insulating film. Covering the conductive structure at the outermost layer of the positive electrode plate 21 with the insulating film can prevent the electrode assembly from coming into contact with the housing body of the battery or with a conductive structure other than the electrode assembly while such contact will affect the safety of the battery.

This application further provides a battery cell. The battery cell may be the battery cell 100 shown in FIG. 3, the battery cell 100 including a housing body 110, an electrode assembly 120, and a top cover 130 as described above, where the housing body 110 has openings at two ends, the housing body 110 is configured to accommodate the electrode assembly 120, and the top cover 130 is connected to an end of the conductive structure 203 away from the body portion 201a and covers the opening of the housing body 110. During actual production, the production process of the foregoing battery cell 100 may include the following steps in sequence: coating, cold pressing, roll welding, gluing, slitting, winding, and laser welding of the top cover 130. FIG. 7 is a schematic diagram of a structure of the electrode assembly 120 welded with the top cover 130 according to an embodiment of this application. As shown in FIG. 7, a welding zone 134 is formed after the electrode assembly 120 is welded with the top cover 130.

This application further provides a battery 10, where the battery 10 may be the battery 10 shown in FIG. 2. As shown in FIG. 2, the battery 10 includes the battery cell 100 described above, and the battery 10 further includes a box 300, where the box 300 is configured to accommodate the battery cell 100. The number of battery cells 100 may be one or more. This is not limited in this application.

This application further provides an electric device, including the battery 10 described above. The battery 10 is configured to supply power to the electric device. The electric device may be a vehicle 1 shown in FIG. 1, and the vehicle may be a fossil fuel vehicle, a natural-gas vehicle, or a new energy vehicle, where the new energy vehicle may be a battery electric vehicle, a hybrid electric vehicle, a range-extended vehicle, or the like. A motor 30, a controller 20, and a battery 10 may be provided inside the vehicle, where the controller 20 is configured to control the battery 10 to supply power to the motor 30. For example, the battery 10 may be provided at the bottom, front, or rear of the vehicle. The battery 10 may be configured to supply power to the vehicle. For example, the battery 10 may be used as an operational power source for the vehicle that is configured for a circuit system of the vehicle, for example, to satisfy power needs for start, navigation, and running of the vehicle. In another embodiment of this application, the battery 10 can be used as not only the operational power source for the vehicle, but also as a driving power source for the vehicle, replacing or partially replacing fossil fuel or natural gas to provide driving traction for the vehicle.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

**Claims**

1.  An electrode plate, **characterized by** comprising a current collector (201), an active substance layer (202), and a conductive structure (203);

    wherein the current collector (201) comprises a body portion (201a) and a tab portion (201b) provided along a first direction (X), wherein the body portion (201a) is covered with the active substance layer (202), the tab portion (201b) is not covered with the active substance layer (202), and the conductive structure (203) extends along the first direction (X) and is connected to the tab portion (201b), forming a connecting zone (204); and
    in a second direction (Y), the connecting zone (204) has a dimension greater than the thickness of a body region of the electrode plate (200), so that after an electrode assembly (120) is wound, connecting zones (204) of adjacent layers are mutually attached; wherein the second direction (Y) is a thickness direction of the electrode plate (200), the second direction (Y) is perpendicular to the first direction (X), and the body region of the electrode plate (200) is a region corresponding to the body portion (201a) covered with the active substance layer (202).

2.  The electrode plate according to claim 1, **characterized in that** the conductive structure (203) comprises a first conductive portion (203a) and a second conductive portion (203b), the first conductive portion (203a) and the second conductive portion (203b) being connected to two sides of the tab portion (201b) in the second direction (Y), respectively.

3.  The electrode plate according to claim 2, **characterized in that** the current collector (201) comprises an insulating layer (123) and a first conductive layer (121) and a second conductive layer (122) provided on two sides of the insulating layer (123), and the first conductive portion (203a) and the second conductive portion (203b) are connected to the first conductive layer (121) and the second conductive layer (122), respectively.

4.  The electrode plate according to any one of claims 1 to 3, **characterized in that** the connecting zone (204) is a welding mark zone formed by welding between the conductive structure (203) and the tab portion (201b).

5.  The electrode plate according to any one of claims 1 to 4, **characterized in that** in the second direction, the dimension D of the connecting zone (204) satisfies:

$$D \geq d1 + d2 + 2d3;$$

wherein d1 is thickness of the body region of the electrode plate (200), d2 is thickness of a body region of an electrode plate with an opposite polarity that forms an electrode assembly (120) with the electrode plate (200), and d3 is thickness of a separator (123) that forms the electrode assembly (120) with the electrode plate.

6.  The electrode plate according to any one of claims 1 to 5, **characterized in that** in the second direction (Y), the connecting zone (204) has a dimension H of 2 mm-9 mm.

7.  The electrode plate according to any one of claims 1 to 6, **characterized in that** in the first direction (X), the connecting zone (204) has a dimension H1 of 3 mm-11 mm.

8.  The electrode plate according to any one of claims 1 to 7, **characterized in that** in the first direction (X), the conductive structure (203) has a dimension H2 of 3 mm-12 mm.

9.  The electrode plate according to any one of claims 1 to 8, **characterized in that** material of the conductive structure (203) comprises at least one of copper and aluminum.

10. An electrode assembly, comprising a positive electrode plate, a separator (123), and a negative electrode plate, wherein the separator (123) is provided between the positive electrode plate and the negative electrode plate, the positive electrode plate, the separator (123), and the negative electrode plate are wound, and the positive electrode plate and/or the negative electrode plate is the electrode plate (200) according to any one of claims 1 to 9.

11. The electrode assembly according to claim 10, **characterized in that** the tab portion (201b) of the positive electrode plate and the tab portion (201b) of the negative electrode plate are provided opposite each other along the first direction (X).

12. The electrode assembly according to claim 10 or 11, **characterized in that** the conductive structure (203) at the outermost layer of the positive electrode plate is covered with a separator (124).

**13.** A battery cell, comprising:

the electrode assembly (120) according to any one of claims 10 to 12;
a housing body (110), wherein the housing body (110) has openings at two ends, and the housing body (110) is configured to accommodate the electrode assembly (120); and
a top cover (130), wherein the top cover (130) is connected to an end of the conductive structure (203) away from the body portion (201a) and covers the opening.

**14.** A battery, comprising the battery cell (120) according to claim 13.

**15.** An electric device, comprising the battery (10) according to claim 14, wherein the battery (10) is configured to provide electric energy for the electric device.

1

FIG. 1

10

FIG. 2

100

131 — 132

130

110

120

FIG. 3

FIG. 4

FIG. 5

FIG. 6

FIG. 7

120

FIG. 8

**INTERNATIONAL SEARCH REPORT**

| International application No. |
| --- |
| **PCT/CN2023/071396** |

| **A.** | **CLASSIFICATION OF SUBJECT MATTER** |
| --- | --- |

H01M50/533(2021.01)i

According to International Patent Classification (IPC) or to both national classification and IPC

| **B.** | **FIELDS SEARCHED** |
| --- | --- |

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 极片, 集流, 集电, 基材, 导电, 极耳, 间隙, 空间, 焊接, 激光, cell, battery, elelctrode, collect+, substrate, conduct+, tab, gap, space, clearance, weld, laser

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | CN 217740571 U (NINGDE CONTEMPORARY AMPEREX TECHNOLOGY CO., LTD.) 04 November 2022 (2022-11-04) description, paragraphs 62-156, and figures 1-8 | 1-15 |
| X | CN 217768425 U (NINGDE CONTEMPORARY AMPEREX TECHNOLOGY CO., LTD.) 08 November 2022 (2022-11-08) description, paragraphs 66-216, and figures 1-15 | 1-15 |
| A | CN 209183628 U (NINGDE CONTEMPORARY AMPEREX TECHNOLOGY CO., LTD.) 30 July 2019 (2019-07-30) entire document | 1-15 |
| A | CN 115036648 A (CONTEMPORARY AMPEREX TECHNOLOGY LTD. (JIANGSU) et al.) 09 September 2022 (2022-09-09) entire document | 1-15 |
| A | CN 218004916 U (BYD CO., LTD.) 09 December 2022 (2022-12-09) entire document | 1-15 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **16 June 2023** | **21 June 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**Information on patent family members**

International application No.

**PCT/CN2023/071396**

| Patent document cited in search report | | | Publication date (day/month/year) | Patent family member(s) | | | Publication date (day/month/year) |
|---|---|---|---|---|---|---|---|
| CN | 217740571 | U | 04 November 2022 | None | | | |
| CN | 217768425 | U | 08 November 2022 | None | | | |
| CN | 209183628 | U | 30 July 2019 | US | 2021234188 | A1 | 29 July 2021 |
| | | | | US | 11658329 | B2 | 23 May 2023 |
| | | | | EP | 3637504 | A1 | 15 April 2020 |
| | | | | EP | 3637504 | B1 | 12 October 2022 |
| | | | | US | 2020119388 | A1 | 16 April 2020 |
| | | | | US | 11024870 | B2 | 01 June 2021 |
| | | | | EP | 4120402 | A1 | 18 January 2023 |
| CN | 115036648 | A | 09 September 2022 | None | | | |
| CN | 218004916 | U | 09 December 2022 | None | | | |

Form PCT/ISA/210 (patent family annex) (July 2022)